# EUROPÄISCHE PATENTANMELDUNG

(11) **EP 4 015 859 A1**
(43) Veröffentlichungstag der Anmeldung: **22.06.2022**
(21) Anmeldenummer: 21212497.8
(22) Anmeldetag: 06.12.2021
(51) Int. Cl.: F16D 13/68, F16D 13/74, F16D 13/64

(54) **ANORDNUNG MIT EINEM BAUTEIL FÜR EIN GETRIEBE EINES FAHRZEUGES**

(30) Priorität: 15.12.2020 DE 102020215912
(71) Anmelder: ZF Friedrichshafen AG, 88046 Friedrichshafen (DE)
(72) Erfinder: Scherer, Markus, 88693 Deggenhausertal (DE)

(57) **Zusammenfassung**

Es wird eine Anordnung mit zumindest einem Bauteil (1) für ein Getriebe eines Fahrzeuges vorgeschlagen, wobei das Bauteil (1) einen ringzylindrischen Innenraum (3) aufweist und mit einer Antriebswelle (2) drehfest und axial verschiebbar verbunden ist, wobei das Bauteil (1) zumindest eine Durchgangsbohrung (4) zum hydraulischen Druckausgleich aufweist, und wobei der ringzylindrische Innenraum (3) des Bauteils (1) zumindest eine der Durchgangsbohrung (4) zugeordnete Innenraumkontur (5A, 5B) als ein eine Kerbwirkung reduzierender Bereich aufweist. Ferner wird ein Getriebe mit der Anordnung vorgeschlagen

## Beschreibung

Die vorliegende Erfindung betrifft eine Anordnung mit einem Bauteil für ein Getriebe eines Fahrzeuges gemäß der im Oberbegriff des Patentanspruches 1 näher definierten Art. Ferner betrifft die Erfindung ein Getriebe mit der Anordnung.

Aus der Fahrzeugtechnik sind Automatikgetriebe bekannt, bei denen zum Realisieren von Übersetzungsstufen mehrere betätigbare Schaltelemente vorgesehen sind, über die ein Drehmoment von einer Antriebswelle zum Abtrieb übertragen wird. Die Schaltelemente werden hydraulisch betätigt. Hierzu sind unter anderem zylinderförmige Bauteile erforderlich, welche drehfest und axial verschiebbar mit einer Antriebswelle des Automatikgetriebes verbunden sind. Zum hydraulischen Druckausgleich weisen die Bauteile Durchgangsbohrungen auf.

Es hat sich gezeigt, dass im Bereich der Durchgangsbohrungen erhebliche mechanische Belastungen an den Bauteilen auftreten, sodass ein frühzeitiges Bauteilversagen auftreten kann.

Der vorliegenden Erfindung liegt die Aufgabe zugrunde, eine Anordnung der eingangs beschriebenen Gattung sowie ein Getriebe mit der Anordnung vorzuschlagen, bei denen ein frühzeitiges Bauteilversagen verhindert wird.

Diese Aufgabe wird erfindungsgemäß durch die Merkmale des Patentanspruchs 1 bzw. 7 gelöst. Vorteilhafte und beanspruchte Ausgestaltungen ergeben sich aus den jeweiligen Unteransprüchen und der Beschreibung sowie den Zeichnungen.

Somit wird eine Anordnung mit zumindest einem Bauteil für ein Getriebe eines Fahrzeuges vorgeschlagen, wobei das Bauteil beispielsweise einen ringzylindrischen Innenraum aufweist und mit einer Antriebswelle drehfest und axial verschiebbar verbunden ist. Das Bauteil weist zumindest eine Durchgangsbohrung zum hydraulischen Druckausgleich bzw. zur Ölführung auf. Um ein frühzeitiges Bauteilversagen zu verhindern, ist vorgesehen, dass der ringzylindrische Innenraum des Bauteils zumindest eine der Durchgangsbohrung zugeordnete Innenraumkontur als ein eine Kerbwirkung reduzierender Bereich aufweist.

Die modifiziert ausgeführte Innenraumkontur des Bauteils erzeugt eine homogene Verteilung der auftretenden mechanischen Kräfte, sodass eine verbesserte Bauteilfestigkeit realisiert wird. Durch die vorgesehene Innenraumkontur werden die mechanischen Spannungen an der Durchgangsbohrung vorbei geleitet und verringern somit die auftretenden mechanischen Spannungen und Belastungen. Dadurch, dass die auftretenden Spannungstensoren homogener entlang der Durchgangsbohrung verlaufen, ergibt sich eine deutlich höhere Bauteilfestigkeit.

Besonders vorteilhaft ist es, wenn die die Kerbwirkung reduzierende Innenraumkontur zumindest zwischen einem Schaft bzw. einem Auslaufbereich der Durchgangsbohrungen und einem Innendurchmesser des ringzylindrischen Innenraumes des Bauteils vorgesehen ist bzw. dort verläuft. In diesem Bereich treten die größten mechanischen Belastungen auf, sodass es besonders vorteilhaft ist, in diesem Bereich den Spannungsverlauf entsprechend zu verändern, sodass keine Spannungsspitzen in diesem Bereich auftreten können. Hierdurch wird die Bauteillebensdauer deutlich erhöht.

Es ist grundsätzlich möglich, die die Kerbwirkung reduzierende Innenraumkontur auf verschiedene konstruktive Arten zu realisieren. Beispielsweise kann die die Kerbwirkung reduzierende Innenraumkontur im Längsschnitt gesehen als Verlauf einen stetigen Polynomzug oder dergleichen bilden. Hierbei wird die Innenraumkontur durch mehrere nacheinander vorgesehene Polynomfunktionsverläufe realisiert, wobei die jeweiligen Übergänge zwischen den Polynomfunktionsverläufen stetig, d. h. in einem vorbestimmten Radius realisiert werden und keine unstetigen Sprünge im Verlauf aufweisen.

Eine andere Art der Gestaltung der die Kerbwirkung reduzierenden Innenraumkontur kann beispielsweise dadurch realisiert werden, dass als Verlauf ein konstanter Radius an der Innenraumkontur im Längsschnitt gesehen realisiert wird. Unabhängig von dem konkret gewählten Verlauf der Innenraumkontur wird jedenfalls eine besonders homogene mechanische Spannungsverteilung mit verbesserter Bauteilfestigkeit realisiert.

Der ringzylindrisch gestaltete Innenraum bietet sich besonders dann an, wenn das Bauteil koaxial zur Antriebswelle angeordnet ist. Bei dieser Ausführung entspricht der Innendurchmesser des ringzylindrischen Innenraumes einem Außendurchmesser eines Hülsenbereiches zum Befestigen des Bauteils auf der Antriebswelle. Demzufolge ist der Innenraum radial außen bei dem Bauteil angeordnet, während der Hülsenbereich des Bauteils radial innen angeordnet ist und die Antriebswelle in sich aufnimmt. Auf diese Weise wird auch eine besonders bauraumsparende Anordnung realisiert, da eine radial verschachtelte Bauweise möglich ist.

Ein weiterer Aspekt der Erfindung beansprucht ein Getriebe mit der vorbeschriebenen Anordnung, sodass sich die bereits beschriebenen und weitere Vorteile ergeben. Als Getriebe kann vorzugsweise ein Achtgang-Automatikgetriebe vorgesehen sein. In besonders vorteilhafter Weise ist das Bauteil als Innenlamellenträger eines als Reibkupplung ausgeführten Schaltelementes ausgeführt.

Nachfolgend wird die Erfindung anhand der Zeichnungen weiter erläutert. Es zeigen:
Figur 1 ein schematischer Längsschnitt durch ein Achtgang-Automatikgetriebe mit einer erfindungsgemäßen Anordnung mit einem Bauteil als Innenlamellenträger einer der Reibkupplungen des Automatikgetriebes;
Figur 2 eine schematische dreidimensionale Einzelteilansicht des Bauteils;
Figur 3 ein schematischer Längsschnitt durch das Bauteil gemäß einer ersten Ausführungsvariante einer Innenraumkontur als Polynomzugverlauf;
Figur 4 ein schematischer Querschnitt der Innenraumkontur des Bauteils gemäß Figur 3;
Figur 5 eine schematische dreidimensionale Detailansicht der Innenraumkontur gemäß Figuren 3 und 4;
Figur 6 ein schematischer Längsschnitt durch das Bauteil gemäß einer zweiten Ausführungsvariante einer Innenraumkontur mit einem konstanten Radius;
Figur 7 ein schematischer Querschnitt der Innenraumkontur des Bauteils gemäß Figur 6; und
Figur 8 eine schematische dreidimensionale Detailansicht der Innenraumkontur gemäß Figuren 6 und 7.

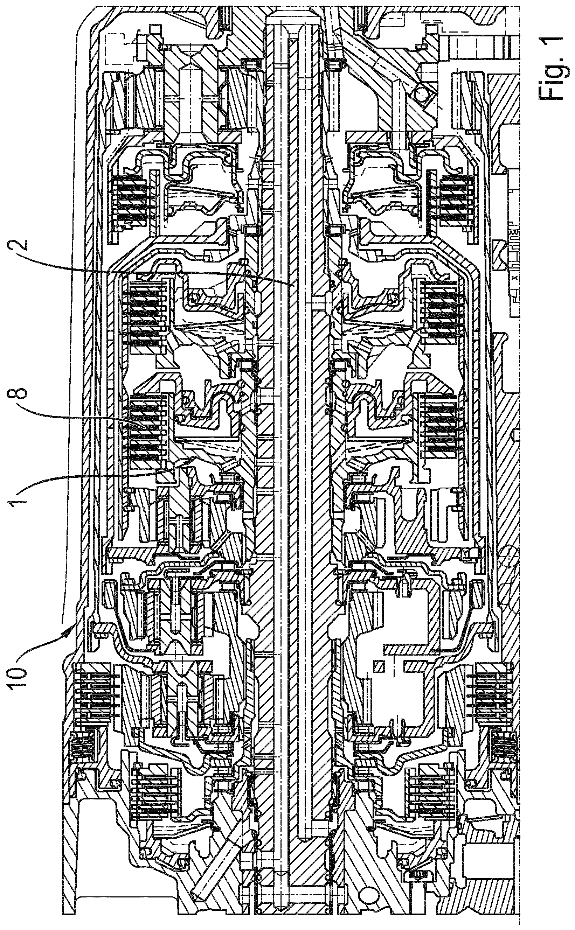

In den Figuren 1 bis 8 sind verschiedene Ansichten einer erfindungsgemäßen Anordnung mit einem Bauteil bzw. Zylinderbauteil 1 für ein Getriebe eines Fahrzeuges beispielhaft dargestellt. Die erfindungsgemäße Anordnung mit dem Bauteil 1 ist lediglich exemplarisch anhand eines Achtgang-Automatikgetriebes 10 zum Betätigen eines als Reibkupplung 8 ausgeführten Schaltelements gezeigt.

In Figur 1 ist beispielhaft ein Längsschnitt des Achtgang-Automatikgetriebes 10 dargestellt, bei dem das Bauteil 1 der erfindungsgemäßen Anordnung einen Innenlamellenträger einer bestimmten Reibkupplung 8 bildet, wobei weitere Getriebebauteile des Automatikgetriebes 10 dargestellt sind.

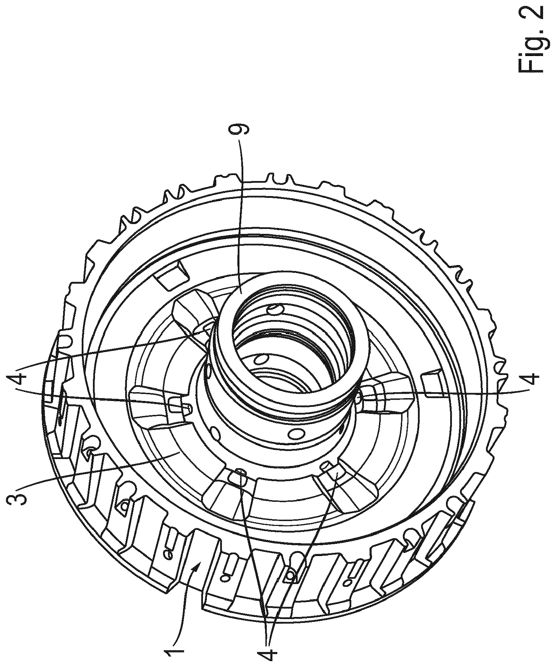

Das Bauteil 1 der erfindungsgemäßen Anordnung ist mit einer Antriebswelle 2 drehfest und axial verschiebbar verbunden. Zum Betätigen der Reibkupplung 8 weist das Bauteil 1 einen ringzylindrischen Innenraum 3 auf, in dem ein hydraulisch betätigter Kolben bewegbar ist. Zum hydraulischen Druckausgleich sind an dem Bauteil 1 mehrere Durchgangsbohrungen 4 vorgesehen, wie beispielsweise aus Figur 2 ersichtlich ist.

Um eine deutlich höhere Bauteilfestigkeit zu erreichen, ist vorgesehen, dass der ringzylindrische Innenraum 3 des Bauteils 1 zumindest eine der Durchgangsbohrung 4 zugeordnete Innenraumkontur 5A, 5B als ein eine Kerbwirkung reduzierender Bereich aufweist.

Unabhängig von den Ausführungsvarianten ist bei der erfindungsgemäßen Anordnung vorgesehen, dass das Bauteil 1 koaxial zur Antriebswelle 2 angeordnet ist und ein Innendurchmesser 7 des ringzylindrischen Innenraumes 3 einem Außendurchmesser eines Hülsenbereiches 9 zum Befestigen des Bauteils 1 auf der Antriebswelle 2 bildet. Demzufolge ist die Antriebswelle 2 im Inneren des Hülsenbereiches 9 angeordnet, während sich der zylindrische Innenraum 3 des Bauteils 1 radial außen um den Hülsenbereiches 9 erstreckt. Die die Kerbwirkung reduzierende Innenraumkontur 5A, 5B des Bauteils 1 verläuft zumindest zwischen einem Schaft bzw. Auslaufbereich 11 der Durchgangsbohrung 4 und dem Innendurchmesser 7 des ringzylindrischen Innenraumes 3.

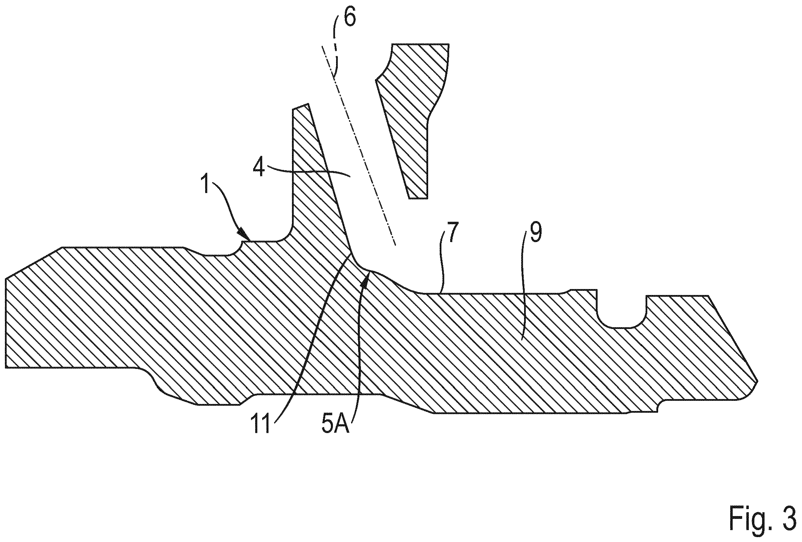

In den Figuren 3, 4 und 5 ist eine erste mögliche Ausführungsvariante der Innenraumkontur 5A beispielhaft dargestellt. Bei der ersten Ausführungsvariante ist der Verlauf der die Kerbwirkung reduzierenden Innenraumkontur 5A im Längsschnitt gesehen als stetiger Polynomzugverlauf ausgeführt, wie dies aus Figur 3 ersichtlich ist. Der Polynomverlauf besteht aus mehreren hintereinander vorgesehenen Polynomfunktionsverläufen mit jeweils stetigem Übergangsbereich.

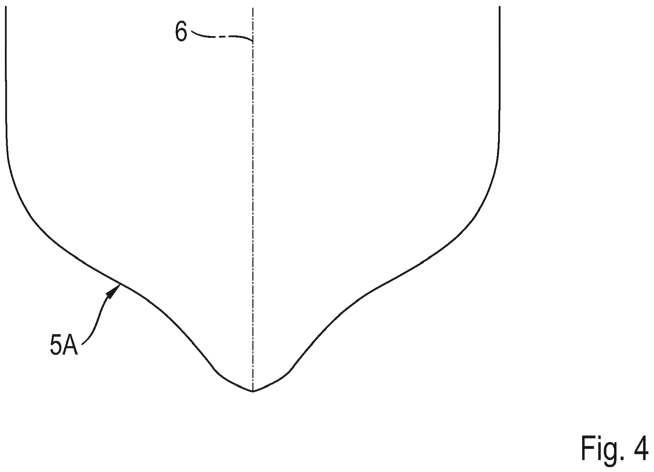

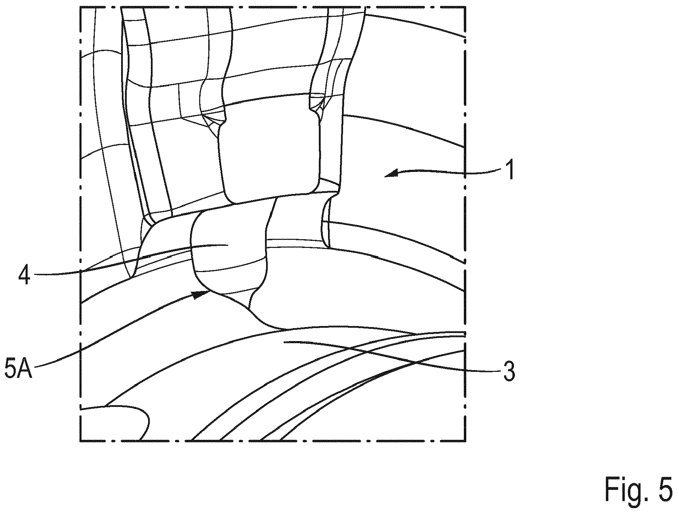

In Figur 4 ist ein Querschnitt durch die in Figur 5 räumlich dargestellte Innenraumkontur 5A gezeigt. Im Querschnitt wird ebenfalls ein Polynomzug gebildet, der zur Längsachse 6 der Durchgangsbohrung 4 symmetrisch ausgeführt ist. Diese Querschnittform ist ebenfalls in Figur 5 erkennbar.

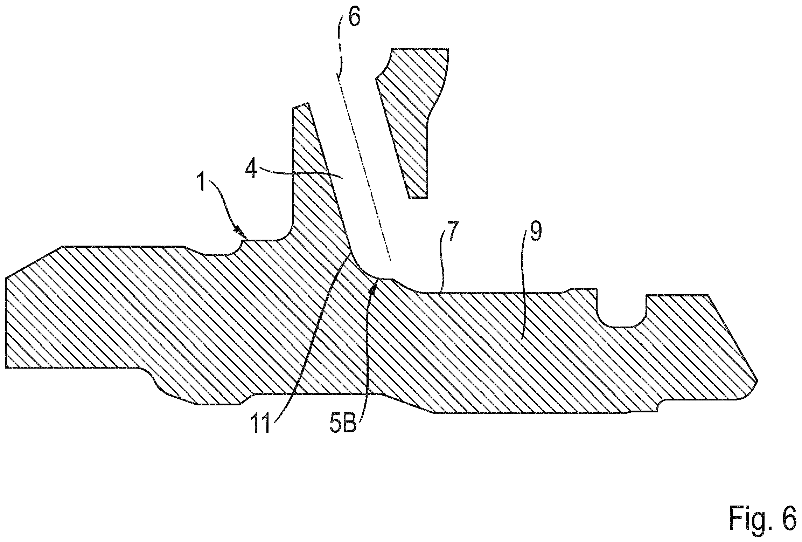

In den Figuren 6, 7 und 8 ist eine zweite mögliche Ausführungsvariante der Innenraumkontur 5B beispielhaft dargestellt. Bei der zweiten Ausführungsvariante ist der Verlauf der die Kerbwirkung reduzierenden Innenraumkontur 5B im Längsschnitt gesehen ein konstanter Radius, wie dies aus Figur 6 ersichtlich ist.

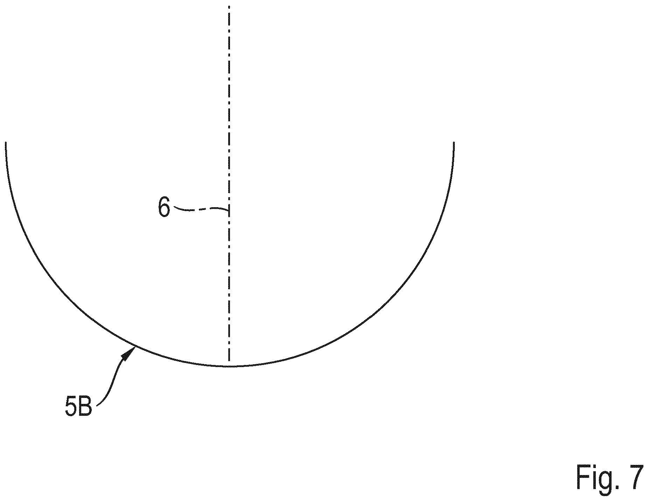

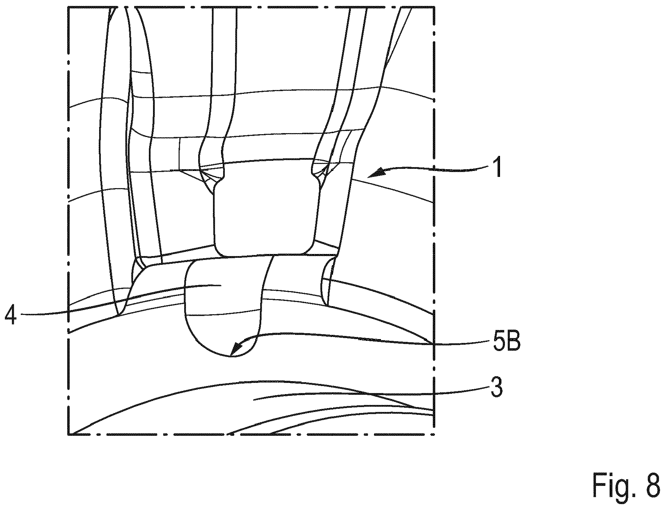

In Figur 7 ist ein Querschnitt durch die in Figur 8 räumlich dargestellte Innenraumkontur 5 gezeigt. Im Querschnitt wird ebenfalls ein konstanter Radius gebildet, der zur Längsachse 6 der Durchgangsbohrung 4 symmetrisch ausgeführt ist. Diese Querschnittform ist ebenfalls in Figur 8 erkennbar.

### Bezugszeichen

- 1: Bauteil bzw. Zylinderbauteil
- 2: Antriebswelle
- 3: ringzylindrischer Innenraum
- 4: Durchgangsbohrung
- 5A: Innenraumkontur als Polynomzug
- 5B: Innenraumkontur als konstanter Radius
- 6: Längsachse der Durchgangsbohrung
- 7: Innendurchmesser ringzylindrischen Innenraumes bzw. Außendurchmesser des Hülsenbereiches
- 8: Reibkupplung
- 9: Hülsenbereich
- 10: Achtgang-Automatikgetriebe
- 11: Schaft bzw. Auslaufbereich der Durchgangsbohrung

## Patentansprüche

1. Anordnung mit zumindest einem Bauteil (1) für ein Getriebe eines Fahrzeuges, wobei das Bauteil (1) einen ringzylindrischen Innenraum (3) aufweist und mit einer Antriebswelle (2) drehfest und axial verschiebbar verbunden ist und wobei das Bauteil (1) zumindest eine Durchgangsbohrung (4) zum hydraulischen Druckausgleich aufweist, **dadurch kennzeichnet, dass** der ringzylindrische Innenraum (3) des Bauteils (1) zumindest eine der Durchgangsbohrung (4) zugeordnete Innenraumkontur (5A, 5B) als ein eine Kerbwirkung reduzierender Bereich aufweist.

2. Anordnung nach Anspruch 1, **dadurch gekennzeichnet, dass** die die Kerbwirkung reduzierende Innenraumkontur (5A, 5B) des Bauteils (1) zumindest zwischen einem Schaft (11) der Durchgangsbohrung (4) und einem Innendurchmesser (7) des ringzylindrischen Innenraumes (3) vorgesehen ist.

3. Anordnung nach Anspruch 1 oder 2, **dadurch gekennzeichnet, dass** die die Kerbwirkung reduzierende Innenraumkontur (5A) im Längsschnitt gesehen als Verlauf einen stetigen Polynomzug bildet.

4. Anordnung nach Anspruch 1 oder 2, **dadurch gekennzeichnet, dass** die die Kerbwirkung reduzierende Innenraumkontur (5B) im Längsschnitt gesehen als Verlauf einen konstanten Radius bildet.

5. Anordnung nach einem der vorangehenden Ansprüche, **dadurch gekennzeichnet, dass** der ringzylindrische Innenraum (3) über den Umfang verteilt mehrere Durchgangsbohrungen (4) aufweist, denen jeweils eine Kerbwirkung reduzierende Innenraumkontur (5A, 5B) zugeordnet ist.

6. Anordnung nach einem der vorangehenden Ansprüche, **dadurch gekennzeichnet, dass** das Bauteil (1) koaxial zur Antriebswelle (2) angeordnet ist und ein Innendurchmesser (7) des ringzylindrischen Innenraumes (3) einen Außendurchmesser eines Hülsenbereiches (9) zum Befestigen des Bauteils (1) auf der Antriebswelle (2) bildet.

7. Getriebe mit einer Anordnung nach einem der vorangehenden Ansprüche.

8. Getriebe nach Anspruch 7, **dadurch gekennzeichnet, dass** das Bauteil (1) als Innenlamellenträger eines als Reibkupplung (8) ausgeführten Schaltelements ausgeführt ist.

9. Getriebe nach Anspruch 7 oder 8, **dadurch gekennzeichnet, dass** es als Achtgang-Automatikgetriebe (10) ausgeführt ist.
